# EUROPEAN PATENT APPLICATION

(11) **EP 4 474 060 A1**
(43) Date of publication of application: **11.12.2024**
(21) Application number: 24466001.5
(22) Date of filing: 04.06.2024
(51) Int. Cl.: B03B 9/06

(54) **METHOD AND DEVICE FOR SEPARATING USABLE MATERIALS FROM WASTE SILICON SOLAR PANELS**

(30) Priority: 07.06.2023 CZ 20230231
(71) Applicant: Silver Silicon, A. S., 517 11 Javornice (CZ)
(72) Inventor: Cerník, Bohumil, 251 62 Mukarov (CZ); Pesek, Tomás, 500 03 Hradec Králové (CZ); Sverák, Michal, 516 01 Javornice (CZ)
(74) Representative: Plicka, Josef

(57) **Abstract**

The present invention relates to a method of separating usable materials from waste silicon solar panels, in which the solar panel, stripped of its aluminum frame and connection box, is freed from the cover glass under the influence of a temperature in the range of 40 to 110 degrees Celsius, and subsequently the solar panel is bent through a bending device with a diameter 10 to 50 millimeters by 45 to 220 degrees while acting on the glass shards of the solar panel with a counter-rotating cleaning roller, the blades of which rotate against the direction of movement of the solar panel shards, or a brush or a scraper bar that moves against the direction of movement of the solar panel shards, or a stream of air that blows against the movement of the solar panel shards.

A device for separating usable materials from waste silicon solar panels for carrying out this method, where a heat source (11) is arranged in front of the cleaning roller (15) and includes a bending means with a diameter of 10 to 50 millimeters, to which is assigned a counter-rotating mechanical cleaning means directed against the movement of the solar panel shards or a source of air flow that is directed against the movement of the solar panel shards.

The present invention enables environmentally friendly separation of usable materials, especially aluminum and glass from waste silicon solar panels.

## Description

### Technical Field

The present invention relates to a method of separating usable materials, especially glass, from waste silicon solar panels and device for carrying out this method. It is a glass separation method and a device for performing this method allowing for the use of glass in the recycling of waste silicon solar panels.

### Background Art

In these days, a high increase in the installation of photovoltaic power plants can be expected, creating realistic conditions for a high production of waste silicon solar panels. Waste silicon solar panels belong to electrical waste and it is necessary to ensure material utilization during their recycling.

Silicon solar panels are typically 1,650 millimeters long, 950 millimeters wide, and weigh 22 kilograms. In terms of material composition, they consist mostly of 72 or 60 silicon cells with a thickness of 120 to 180 micrometers, with dimensions of 125 by 125 millimeters, or 156 by 156 millimeters, which are equipped with silver electrodes, and are connected in series by silver-plated copper strips, so-called buses with a width of 1.5 to 2.5 millimeters.

This assembly is hermetically sealed from above and below in two layers of plastic film, most often from polyethylene vinyl acetate, which creates an encapsulating agent, with a thickness of 0.3 to 0.75 millimeters. The encapsulant is protected on top by a toughened, high-quality sodium-lime-silica cover glass, usually 3.2 millimeters thick, with a high degree of transparency in the entire range of visible light wavelengths and an extremely low iron oxide content. On the lower side, a three-layer protective film, usually made of a combination of polyethylene terephthalate and polyvinyl fluoride, with a total thickness of approximately 0.3 millimeters. The encapsulant with glass and a three-layer protective film forms a sandwich, which is pasted by means of silicone into an aluminum frame with a width of 35 to 50 millimeters, which is usually made of an alloy designated as 6063, 6065, T5/T6. The electric current is taken from the solar panel through the connection box, which is usually made of polyphenylene oxide and brass, equipped with bypass diodes, and glued via silicone to the underside of the solar panel. The connection box is connected to the wiring outside the solar panel via cables and terminals.

There are currently three groups of methods for recycling waste silicon solar panels: mechanical, thermal and chemical.

Mechanical recycling methods. After removing the aluminum frame and the connection box, mechanical force is applied to the rest of the silicon solar panel, i.e. mainly by crushing, grinding, cutting or milling in order to remove the cover glass from the plastic layers protecting the silicon cells. In addition to the high energy demand of this method, other significant disadvantages are the gain of glass in the form of small-grained glass shards which cannot be used as glass raw material, and high losses of busbars, silicon and silver.

Thermal procedures. After removing the aluminum frame and connection box, heat is applied to the plastic layers, either without air access, so that pyrolysis occurs, or with air access, i.e. combustion. This isolates the cover glass, which is in the form of glass shards, copper busbars and silicon. These materials are subsequently separated and processed. The biggest weakness of thermal processes, in addition to the production of carbon dioxide, are the emissions of sulfur dioxide, hydrochloric acid and especially hydrogen fluoride, which are technically and economically difficult to capture from the flue gas.

Chemical processes. After removing the aluminum frame and junction box, these processes use a combination of polar and non-polar solvents to remove the plastic layers and release the cover glass in the form of glass shards, copper busbars and silicon, which can be separated and further processed. In addition to the necessity of regenerating spent solvents and dealing with regeneration sludge, the main weakness of these procedures is the lengthy process, which takes several days.

The common disadvantages of all mentioned recycling methods are their demands on technical equipment, i.e. requirements for crushers, furnaces, reactors and their high energy consumption.

### Summary of the Invention

The essence of the method of separating usable materials from waste silicon solar panels according to the invention is that the solar panel, freed from the aluminum frame and connection box, is freed from the cover glass under the influence of a temperature in the range of 40 to 110 degrees Celsius, and that the solar panel is subsequently bent through a bending means with a diameter of 10 to 50 millimeters by 45 to 220 degrees with simultaneous mechanical action on the glass shards of the solar panel by a cleaning roller whose blades rotate against the direction of movement of the solar panel shards, or by a brush or scraper bar that moves against the direction of movement of the shards of the solar panel, or by a stream of air that blows against the movement of the solar panel shards.

Loose glass shards from the remains of solar panels are advantageously sorted, firstly granulometrically using vibrating sieves into shards with dimensions over 3 millimeters and others, and secondly from the point of view of translucency into translucent shards and others through an optical sorter.

The bending means is preferably a bending cylinder with a diameter of 10 to 50 millimeters or a rounded surface with a rounding diameter of 10 to 50 millimeters.

The heat source can be either a hot air source or a source of electromagnetic radiation with a wavelength of 250 to 500 nanometers, or a combination thereof.

At least one temperature sensor can be arranged behind the heat source.

The mechanical cleaning means can be a cleaning roller that is equipped with lamellas, wherein the ends of the lamellas of the cleaning roller are at a distance of 1 to 4 millimeters from the surface of the upper plastic film.

### Brief Description of the Drawings

The invention is explained in more detail in the description of examples of specific embodiments of the invention using the attached drawings, where:
Figure 1 shows the general material composition of a silicon solar panel, which is recycled within the scope of the invention with the simultaneous separation of all usable materials, especially aluminum and glass,
Figure 2 shows a block diagram of the overall recycling technology of separation of usable materials from waste solar panels according to the present invention,
Figure 3 schematically shows the principle of peeling glass shards from a silicon solar panel,
Figure 4 schematically shows a side view of a device for peeling glass shards from a silicon solar panel,
Figure 5 schematically shows a floor plan of a machine for peeling glass shards from a silicon solar panel,
Figure 6 shows a schematic side view of a device for peeling off glass shards from a silicon solar panel with an electromagnetic radiation heat source, and
Figure 7 shows a schematic side view of a device for peeling off glass shards from a silicon solar panel using an alternative method of removing glass shards with an air stream.

### Deatiled Description of the Invention

The subject of the application is a method of separating usable materials from waste silicon solar panels and a device for performing this method, while the device itself for performing the method of separating usable materials from waste silicon solar panels is primarily concerned with removing the cover glass from waste silicon solar panels.

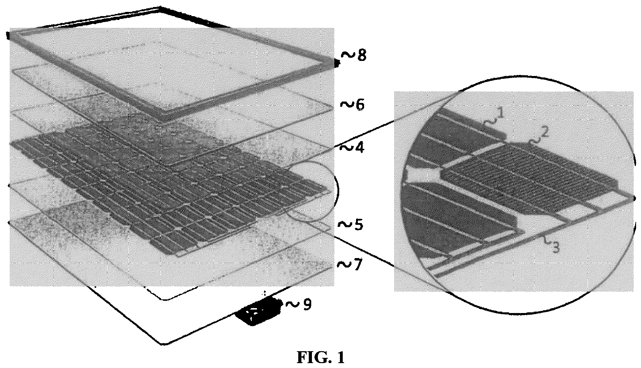

Silicon solar panels are composed of silicon cells 1, which consist of silicon plates equipped with silver electrodes 2, which are connected in series by silver-plated copper strips, referred to as buses 3, as can be seen in Figure 1.

The assembly of solar panels is hermetically sealed with two layers of plastic film from above and from below, i.e. the upper plastic film 4 and the lower plastic film 5. The upper plastic film 4 is protected by a toughened cover glass 6 and on the lower side of the assembly there is a plastic protective film 7. All described the layers form a non-dismantling, waterproof, sandwich construction fixed by an aluminum frame 8. On the underside of the solar panel is a connection box 9, which leads the produced electrical energy outside the panel.

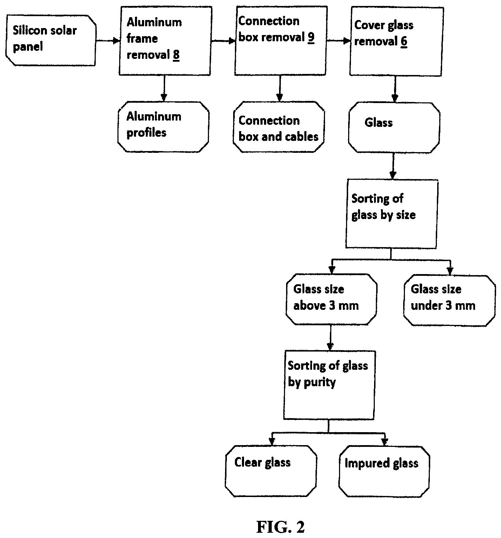

The method of separating usable materials from waste silicon solar panels is shown schematically in Figure 2 and consists of the following technological operations.

In preparation for separation, the silicon solar panel is first freed from the aluminum frame 8 and the connection box 9. The connection box 9 is removed, including any cables and terminals. Aluminum frames are used as a secondary raw material.

The connection box 9 is made up of a plastic box containing a metal armature with bypass diodes, which diverts the resulting electric charge outside the solar panel via two cables with terminals. This assembly can be dismantled manually and the individual components can be further used.

As a result of previous manipulations with the waste solar panel during the disassembly, transport and removal of the aluminum frame 8 and the connection box 9, the hardened cover glass 6 is broken into individual fragments, which, however, at this stage are firmly and for the most part sticking to the upper plastic film 4.

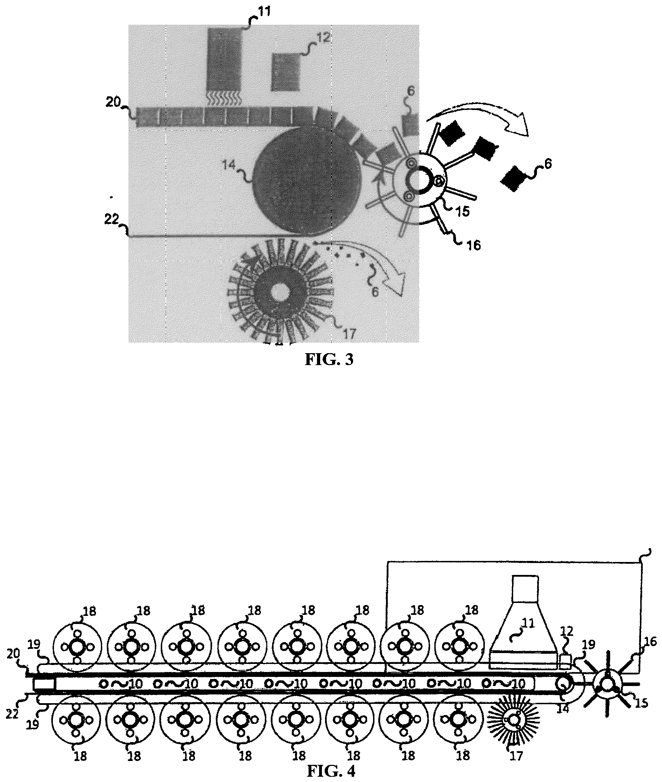

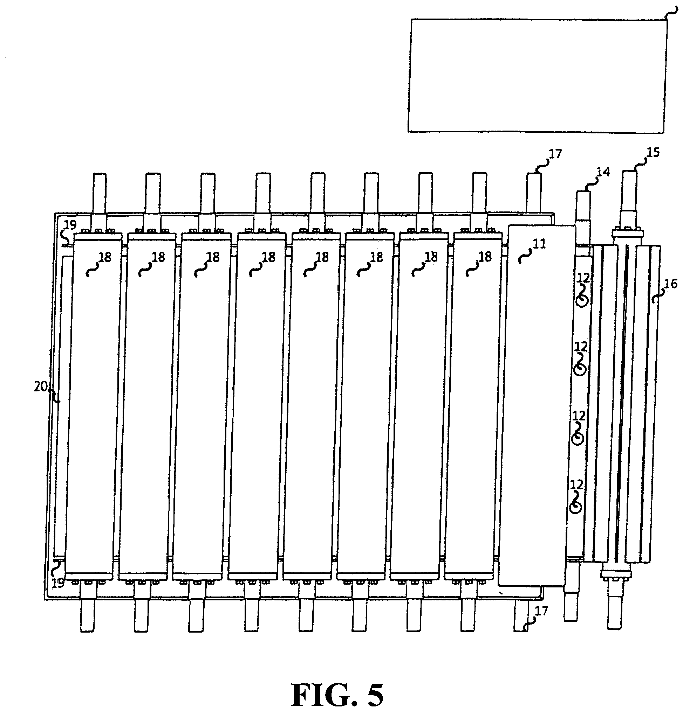

After removing the aluminum frame 8 and the connection box 9, the rest of the solar panel 20 is transferred to a conveying device, which can be a roller track as shown in Figure 4 and Figure 5, but alternatively, the conveying device can also be an entrainment belt, a vacuum belt, two pressure belts acting against each other, front link, side link, guide chains, belt conveyor or ball conveyor.

The transport device moves the remainder of the solar panel 20, typically at a speed of up to 15 centimeters per second. The transport device enables this movement, but it also makes it possible to stop this movement, smoothly regulate this movement, or to move the remainder of the solar panel 20 in reverse, i.e. backwards. Movement, its speed and direction are controlled by the control unit 13.

The transport device for the rest of the solar panels freed from aluminum frames and connection boxes can also be another device that ensures the forced and controlled movement of the rest of the solar panel under the heat source, towards the bending means.

At the same time, the transport device fixes the moving remainder of the solar panel 20 so that on the bending means, which in this particular case is the bending roller 14, precise bending of the rest of the solar panel 20 occurs and so that the movement of the remainder of the solar panel 20 is not affected by the mechanical action of the mechanical cleaning agent, which in this particular case is the cleaning roller 15. To fix the remainder of the solar panel 20, the force of the drive rollers 10 acting against the pressure rollers 18 is used, which in combination with the side guide 19 ensures that the remainder of the solar panel 20 moves in the prescribed direction and at the required speed.

Alternatively, to fix the remainder of the solar panel 20, a vacuum belt, two pressure belts acting against each other, front tie rods, side tie rods, side chain leads, side belt guides, side or front lamella mounts and tie rods can also be used. The fixation of the remainder of the solar panel 20 on the bending cylinder 14 is ensured by the lateral guide 19, which ensures that the remainder of the solar panel 20 will exactly copy the radius of the bending means. The fixation of the remainder of the solar panel 20 on the bending means can alternatively be ensured by one or more pressure cylinder 18, encapsulation of part of the bending cylinder 14, ball or roller guide, front link, side links, side chain guide or side lamella handles.

The speed and direction of movement of the transport device is determined by the physico-chemical properties of the remainder of the solar panel 20, which cause different requirements for heating of the upper plastic film 4. The result is a request for faster or slower movement of the transport device carrying the remainder of the solar panel 20, or a request to stop the movement, or even for a movement in reverse. The control unit 13 conveys the requirements for the direction and speed of movement or stopping to the transport device.

The heat source 11 is located above the moving remainder of the solar panel 20 at the shortest possible distance from the remainder of the solar panel 20, and acts on the upper cover glass 6 across the entire width of the rest of the solar panel 20. The heat source 11 ensures an even distribution of the heated air stream on the upper cover glass 6. The air stream is heated in an electric heater, which is located behind the outlet of the air stream from the fan, to a temperature in the range of 100 to 700 degrees Celsius and then driven by the fan to the heat source H. Infrared radiation, induction heating, radiant heat or flame can alternatively be used to heat the air stream. By the effect of the heated air stream on the upper cover glass 6, the upper plastic film 4 is indirectly heated. When the upper plastic film 4 is heated to a temperature in the range of 40 to 110 degrees Celsius, there is a significant disruption of the adhesion forces between the upper cover glass 6 and the upper plastic film 4. This is caused by the release of fragments of the upper cover glass 6 from the upper plastic film 4.

The temperature range of the hot air stream and the speed of the air stream are determined by the physico-chemical properties of the remainder of the solar panel 20, which cause different requirements for heating the upper plastic film 4 and the speed of movement of the transport device. It is true that the faster the remainder of the solar panel 20 moves, the higher must be the temperature of the hot air stream and the speed of the air distributed by the heat source 11 to the upper cover glass 6. The aim is to indirectly heat the upper plastic film 4 to a temperature in the range of 40 to 110 °C.

The correct temperature, which is needed to break the adhesive forces between the upper plastic film 4 and the upper cover glass 6, is reached by the heat source 11 acting on the remainder of the solar panel 20 with a stream of hot air. This heats up the upper cover glass 6, which is then indirectly heated by the upper plastic film 4. The temperature of the upper plastic film 4 at the point where the remainder of the solar panel 20 leaves the heating zone of the heat source 11 is continuously verified by a set of temperature sensors 12. Depending on the information from the temperature sensors 12, the control unit 13 reacts both to the direction and speed of movement of the transport device, as well as to the temperature of the hot air stream and its speed, so that the de-adhesion temperature is reached in the upper plastic film 4.

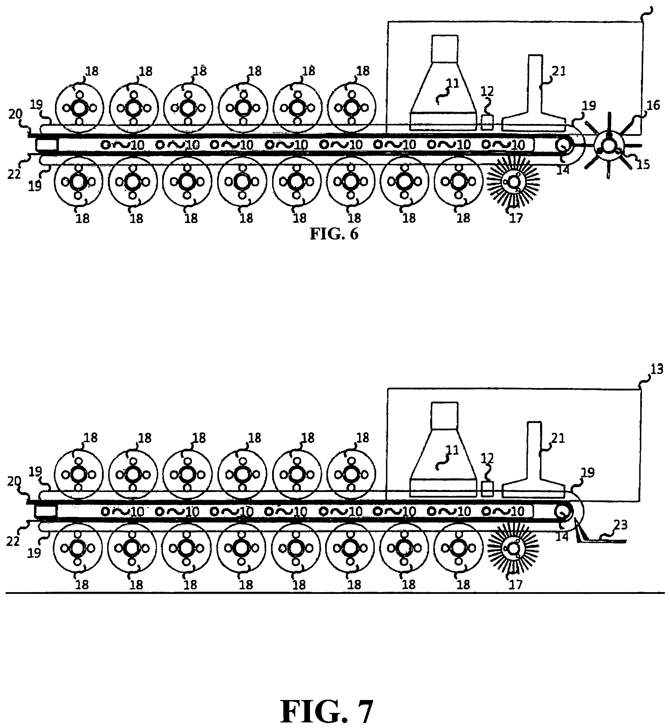

Alternatively, the upper plastic film 4 can also be heated directly by electromagnetic radiation with a wavelength of 250 nanometers to 500 nanometers. In that case, the heat source 11 is supplemented or replaced by a source of electromagnetic radiation 21. An alternative arrangement of heating by electromagnetic radiation is shown in Figure 6.

After breaking the adhesion forces between the upper plastic film 4 and the cover glass 6, due to the action of the heat source 11, the glass shards of the upper cover glass 6 are released. This release is subsequently supported by the bending of the rest of the solar panel 20 through a smooth, steel, non-driven, bending cylinder 14 with a diameter of 20 millimeters. The remainder of the solar panel 20 is bent by 180 degrees through the bending cylinder 14. This causes the edges of the glass shards of the upper cover glass 6 to peel off from the upper plastic film 4, and also to open the fractures between the individual shards of the upper cover glass 6 and partially expose the side edges of these shards. The principle of operation of the bending cylinder 14 is shown in detail in Figure 3.

Alternatively, a non-smooth, non-driven, driven or solid cylinder made of iron, non-ferrous metals, metal alloys, carbon, carbide, plastic, silicone, rubber, composite, wood with a diameter of 10-50 millimeters can also be used as a bending means. Alternatively, the bending means can be a rounded surface with a rounding diameter of 10-50 millimeters, but also a roller, ball or bearing track, or any other device that ensures the required bending of the remainder of the solar panel 20 corresponding to the diagram shown in Figure 3.

The remainder of the solar panel 20 may alternatively be bent at other angles, ranging from 45 degrees to 220 degrees depending on the type and dimensions of the alternative bending means.

The fragments of the upper cover glass 6, partially released due to the bending of the remainder of the solar panel 20 through the bending cylinder 14, are removed from the upper plastic film 4 by the mechanical action of the cleaning cylinder 15. The cleaning cylinder 15 is a steel moving cylinder with eight longitudinal, metal lamellae 16. The cleaning cylinder 15 is in the horizontal plane co-axial with the bending roller 14. The cleaning roller 15 acts on the remainder of the solar panel 20 in its entire width. The cleaning cylinder 15 has a diameter of 20 millimeters and a height of the longitudinal slats of 50 millimeters. The cleaning roller 15 rotates against the direction of movement of the remainder of the solar panel 20 at such a distance that the ends of the slats 16 rotate 2 millimeters from the surface of the plastic film 4. This causes the slats 16 of the cleaning roller 15 to act on the shards of the cover glass 6 by peeling them off the plastic foil 4. The principle of peeling off the cover glass 6 from the plastic foil 4 by the cleaning roller 15 is shown in detail in Figure 3.

Alternatively, the cleaning roller 15 may be made of iron, non-ferrous metals, metal alloys, carbon, carbide, plastic, silicone, rubber, composite, wood and may have a diameter of 10 to 100 millimeters. Alternatively, the cleaning roller 15 does not have to be horizontally aligned with the bending roller 14. Alternatively, the cleaning roller 15 can rotate in the direction of movement of the rest of the solar panel 20 or the function of the cleaning roller 15 can be replaced by another device that will physically act on the fragments of the upper cover glass 6, for example by brushing, vibrations, horizontal or vertical movement, or as a fixed obstacle, for example, a fixed edge made of iron, non-ferrous metals, metal alloys, carbon, carbide, composite.

Alternatively, instead of the cleaning cylinder, an air nozzle 23 can be used, which at the point of bending of the remainder of the solar panel 20 acts on the surfaces of the cover glass 6 shards with an air stream of such intensity that the cover glass 6 shards are released from the plastic film 4, as shown in Figure 7. The cover glass 6 can also be removed from the remainder of the solar panel 20 using this procedure.

The alternative of the air nozzle 23 can be used both in combination with heating the remainder of the solar panel 20 by the heat source 11, which is shown in Figure 4, and also in combination with heating through the source of electromagnetic radiation 21, shown in Figure 6, or both methods of heating as follows in in any order.

After the shards of the upper cover glass 6 are removed by the cleaning roller 15, only the encapsulating agent and the lower plastic film 5 remain from the remainder of the solar panel 20. On the upper plastic film 4 of the encapsulating agent, some small glass shards that were not removed by the cleaning roller 15 still remain. These shards are further cleaned with brush 17. Brush 17 is a cylindrical steel brush. The brush 17 is coaxial with the bending cylinder 14 in the horizontal plane. The brush 17 acts on the remainder of the solar panel 20, from which the cover glass 6 has been removed in its entire width. Brush 17 has a diameter of 20 millimeters and a bristle length of 20 millimeters. The brush 17 rotates counter to the movement of the remainder of the solar panel 20 at such a distance that the ends of the bristles brush the surface of the upper plastic sheet 4. This causes the bristles of the brush 17 to act on the tiny shards of the upper cover glass 6 by removing them from the plastic sheet 4 so that after the action of the brush 17, the rest of the solar panel remains free of glass 22. The principle of removing small fragments of the cover glass 6 from the plastic film 4 by the action of the brush 17 is shown in detail in Figure 3.

Alternatively, brush bristles 17 may be made of nylon, non-ferrous metals, metal alloys, carbon, carbide, plastic, silicone, rubber, composite, and may be 2 to 50 millimeters in length. Alternatively, the brush 17 does not have to be vertically aligned with the bending cylinder 14. Alternatively, the brush 17 can rotate in parallel with the movement of the remainder of the solar panel 20 stripped of the upper cover glass 6. Alternatively, the function of the brush 17 can be replaced by another device that will physically act on the small fragments of the upper cover glass 6, for example, a cylinder with longitudinal slats, a sieve, a blade or another fixed obstacle, vibrations, air flow, blasting, horizontal or vertical movement or a combination thereof.

The obtained glass shards are sorted into size fractions below 3 millimeters and above 3 millimeters using sieves with a mesh size of 3 millimeters. After sorting, shards over 3 millimeters in size are further separated on optical sorters so that the resulting raw material does not contain shards with the remains of encapsulation agents, as only clear glass shards with a grain size over 3 millimeters are full-fledged glass raw materials.

Glass shards with a grain size of less than 3 millimeters and contaminated shards with a grain size of more than 3 millimeters can be a substitute for mineral fillers in the production of floor concrete and screeds for residential construction or concrete blocks for building construction.

### Industrial Applicability

The invention can be used in all instances of environmentally friendly separation of usable materials, especially aluminum and glass from waste silicon solar panels.

### List of reference numerals

- 1: - silicon cell
- 2: - silver electrodes
- 3: - bus
- 4: - upper plastic film
- 5: - lower plastic film
- 6: - cover glass
- 7: - protective film
- 8: - aluminum frame
- 9: - connection box
- 10: - drive roller
- 11: - heat source
- 12: - temperature sensor
- 13: - control unit
- 14: - bending roller
- 15: - cleaning roller
- 16: - slat
- 17: - brush
- 18: - pressure cylinder
- 19: - lateral guide
- 20: - remainder of the solar panel
- 21: - source of electromagnetic radiation
- 22: - remainder of the solar panel devoid of glass
- 23: - air nozzle

## Claims

1. Method of separating usable materials from waste silicon solar panels, wherein the solar panel is devoid from the frame and connection boxes with cables and devoid from the cover glass under the influence of a temperature in the range of 40 to 110 degrees Celsius, **characterized in that** the solar panel is subsequently bent through a bending means with a diameter of 10 to 50 millimeters by 45 to 220 degrees while simultaneously mechanically acting on the glass shards of the solar panel by a counter-rotating cleaning roller whose blades rotate against the direction of movement of the solar panel shards, or by a brush or scraper bar that moves against the direction of movement of the shards of the solar panel, or by an air stream that blows against the movement of the solar panel shards.

2. Method of separating usable materials from waste silicon solar panels according to claim 1, **characterized in that** the loosened glass shards from the remainders of solar panels are sorted, on one hand, granulometrically by means of vibrating sieves into shards with dimensions above 3 millimeters and others, and on the other hand, from the point of view translucencies into translucent shards and other shards through an optical sorter.

3. Device for separating usable materials from waste silicon solar panels for carrying out the method according to claim 1, where a heat source (11) is arranged in front of the cleaning roller (15), **characterized in that** it includes a bending means with a diameter of 10 to 50 millimeters, to which is assigned a mechanical cleaner directed against the movement of the solar panel shards or an air source that is directed against the movement of the solar panel shards.

4. Device for separating usable materials from waste silicon solar panels according to claim 3, **characterized in that** the bending means is a bending cylinder (14) with a diameter of 10 to 50 millimeters or a rounded surface with a diameter of 10 to 50 millimeters.

5. Device for separating usable materials from waste silicon solar panels according to claim 3, **characterized in that** the heat source (11) is either a hot air source or a source of electromagnetic radiation with a wavelength of 250 to 500 nanometers, or a combination thereof.

6. Device for separating usable materials from waste silicon solar panels according to claim 3, **characterized in that** at least one temperature sensor (12) is arranged behind the heat source (11).

7. Device for separating usable materials from waste silicon solar panels according to claim 4, **characterized in that** the mechanical cleaning means is a cleaning roller (15) which is equipped with slats (16), wherein the ends of the slats (16) of the cleaning roller (15) are in distances of 1 to 4 millimeters from the surface of the upper plastic film (4).

8. Device for separating usable materials from waste silicon solar panels according to claim 3, **characterized in that** the mechanical cleaning agent is a brush whose bristle ends rotate at a distance of 1 to 4 millimeters from the surface of the upper plastic film (4), or an air nozzle (23), or a combination thereof.

9. Device for separating usable materials from waste silicon solar panels according to claim 3, **characterized in that** at least one brush (17) is included behind the mechanical cleaning agent, the bristle ends of which are in contact with the surface of the upper plastic film (4).
